# EUROPEAN PATENT APPLICATION

(11) **EP 4 571 804 A2**
(43) Date of publication of application: **18.06.2025**
(21) Application number: 24211163.1
(22) Date of filing: 06.11.2024
(51) Int. Cl.: H01G 4/232, H01G 4/30

(54) **EXTERNAL ELECTRODE FOR MULTILAYER ELECTRONIC COMPONENT COMPRISING A GLASS LAYER, A FIRST ELECTRODE LAYER AND A CONDUCTIVE RESIN LAYER**

(30) Priority: 15.12.2023 KR 20230182943
(71) Applicant: Samsung Electro-Mechanics Co., Ltd., Gyeonggi-do (KR)
(72) Inventor: Kim, Seung Ah, Suwon-si, Gyeonggi-do (KR); Gu, Hyun Hee, Suwon-si, Gyeonggi-do (KR); Lee, Kangha, Suwon-si, Gyeonggi-do (KR); Choi, Eun Byeol, Suwon-si, Gyeonggi-do (KR); Choi, Hong Je, Suwon-si, Gyeonggi-do (KR); Kim, Hong Seok, Suwon-si, Gyeonggi-do (KR)
(74) Representative: Grünecker Patent- und Rechtsanwälte PartG mbB

(57) **Abstract**

A multilayer electronic component (100) comprising:

a body (110) including a first surface (1) and a second surface (2) opposing each other in a first direction (T), a third surface (3) and a fourth surface (4) connected to the first surface (1) and the second surface (2) and opposing each other in a second direction (L), and a fifth surface (5) and a sixth surface (6) connected to the first surface (1) to the fourth surface (4) and opposing each other in a third direction (W), the body (110) including a central portion (110a) including a dielectric layer (111) and internal electrodes (121, 122) alternately disposed with the dielectric layer (111) in the first direction (T), and an outer portion (110b) covering both sides of the central portion (110a) in the first direction (T) and both sides of the central portion (110a) in the third direction (W); and

an external electrode (131 or 132) including a connection portion (C1 or C2) disposed on the third surface (3) or the fourth surface (4) and a band portion (B1 or B2) extending from the connection portion (C1 or C2) to portions of the first surface (1) and the second surface (2),

wherein the external electrode (131 or 132) includes

- a glass layer (131a or 132a) disposed in the band portion (B1 or B2),

- a base electrode layer (131b or 132b) disposed in the connection portion (C1 or C2) and in contact with one or more of the internal electrodes (121, 122), and

- a conductive resin layer (131c or 132c) disposed on the base electrode layer (131b or 132b), and

- a portion of the glass layer (131a or 132a) is disposed in the connection portion (C1 or C2), and

- an end of the glass layer (131a or 132a) disposed in the connection portion (C1 or C2) is disposed on the outer portion (110b).

## Description

### CROSS-REFERENCE TO RELATED APPLICATION(S)

This application claims benefit of priority to Korean Patent Application No. 10-2023-0182943 filed on December 15, 2023 in the Korean Intellectual Property Office, the disclosure of which is incorporated herein by reference in its entirety.

### TECHNICAL FIELD

The present disclosure relates to a multilayer electronic component.

A Multilayer Ceramic Capacitor (MLCC), a multilayer electronic component, is a chip-type capacitor mounted on the printed circuit boards of various electronic products including video display devices such as liquid crystal displays (LCDs) and plasma display panels (PDPs), computers, smartphones, and mobile phones, to serve to charge or discharge electricity. Such multilayer ceramic capacitors are used as components in various electronic devices due to the small size, high capacitance, and ease in mounting thereof.

Recently, with the development of electric vehicles and autonomous driving technology, research into multilayer ceramic capacitors that may operate stably even in high temperature, high pressure, and high humidity environments has continued. In detail, in the case of multilayer ceramic capacitors for high voltage, withstand voltage and bending strength characteristics may be more important. If the penetration of moisture and/or plating liquid from the outside and the occurrence of cracks due to bending stress are not prevented, the reliability of multilayer ceramic capacitors may deteriorate, and arc discharge may cause damage to the multilayer ceramic capacitors as well as to the printed circuit boards on which the multilayer ceramic capacitors are mounted.

As an example of improving the bending strength of a multilayer ceramic capacitor, applying a conductive resin layer to the external electrode or increasing the length of the band portion may be considered. However, as the length of the band section becomes longer, the multilayer ceramic capacitor may become more vulnerable to arc discharge, the conductive resin layer has weak adhesion to the body, and the resin in the conductive resin layer may burn in a high temperature and high pressure environment.

### SUMMARY

An aspect of the present disclosure is to improve reliability of multilayer electronic components.

An aspect of the present disclosure is to improve bending strength of multilayer electronic components.

According to an aspect of the present disclosure, a multilayer electronic component includes a body including a first surface and a second surface opposing each other in a first direction, a third surface and a fourth surface connected to the first surface and the second surface and opposing each other in a second direction, and a fifth surface and a sixth surface connected to the first surface to the fourth surface and opposing each other in a third direction, the body including a central portion including a dielectric layer and internal electrodes alternately disposed with the dielectric layer in the first direction, and an outer portion covering both sides of the central portion in the first direction and both sides of the central portion in the third direction, and an external electrode including a connection portion disposed on the third surface or the fourth surface and a band portion extending from the connection portion to portions of the first surface and the second surface. The external electrode includes a glass layer disposed in the band portion, a base electrode layer disposed in the connection portion and in contact with one or more of the internal electrodes, and a conductive resin layer disposed on the base electrode layer. A portion of the glass layer is disposed in the connection portion, and an end of the glass layer disposed in the connection portion is disposed on the outer portion.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an embodiment;
FIG. 2 is a cross-sectional view schematically illustrating a cross section taken along line I-I' of FIG. 1;
FIG. 3 is a cross-sectional view schematically illustrating a cross-section taken along line II-II' of FIG. 1;
FIG. 4 is a cross-sectional view schematically illustrating a cross section taken along line III-III' of FIG. 2;
FIG. 5 is a side view of a multilayer electronic component viewed from the third surface of FIG. 1; and
FIGS. 6 to 8 are cross-sectional views schematically illustrating a multilayer electronic component according to another embodiment, and are diagrams corresponding to FIG. 2.

### DETAILED DESCRIPTION

Hereinafter, embodiments of the present disclosure will be described with reference to detailed embodiments and accompanying drawings. However, the embodiments of the present disclosure may be modified in many different forms, and the scope of the present disclosure is not limited to the embodiments described below. In addition, the embodiments of the present disclosure are provided to more completely describe the present disclosure to those skilled in the art. Therefore, the shape and size of elements in the drawings may be exaggerated for clearer explanation, and elements indicated by the same reference numerals in the drawings are the same elements.

In addition, to clearly describe the present disclosure in the drawings, parts irrelevant to the description are omitted, and the size and thickness of each component illustrated in the drawings are arbitrarily illustrated for convenience of description, and thus, the present disclosure is not necessarily limited to the illustrated embodiment. Also, components having the same function within the scope of the same concept are described using the same reference numerals. Furthermore, throughout the specification, when a certain component is said to "include," it means that it may further include other components without excluding other components unless otherwise stated.

In the drawings, the first direction may be defined as the thickness (T) direction, the second direction may be defined as the length (L) direction, and the third direction may be defined as the width (W) direction.

### Multilayer Electronic Component

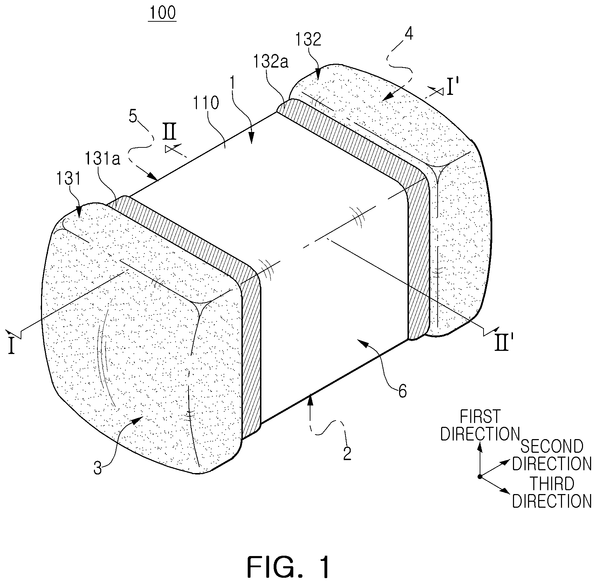

FIG. 1 is a perspective view schematically illustrating a multilayer electronic component according to an embodiment.

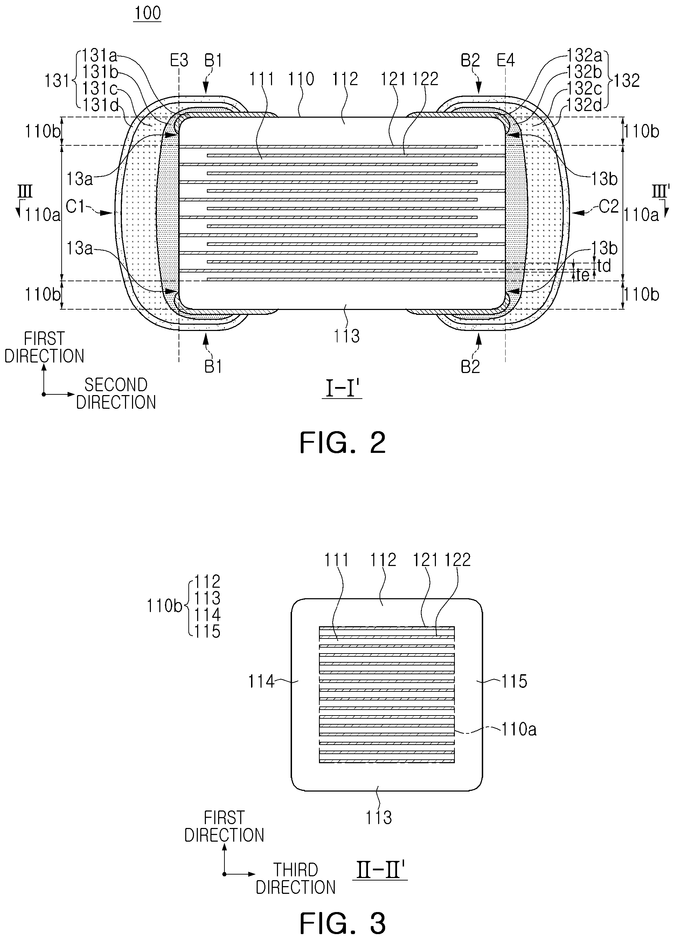

FIG. 2 is a cross-sectional view schematically illustrating a cross section taken along line I-I' of FIG. 1.

FIG. 3 is a cross-sectional view schematically illustrating a cross-section taken along line II-II' of FIG. 1.

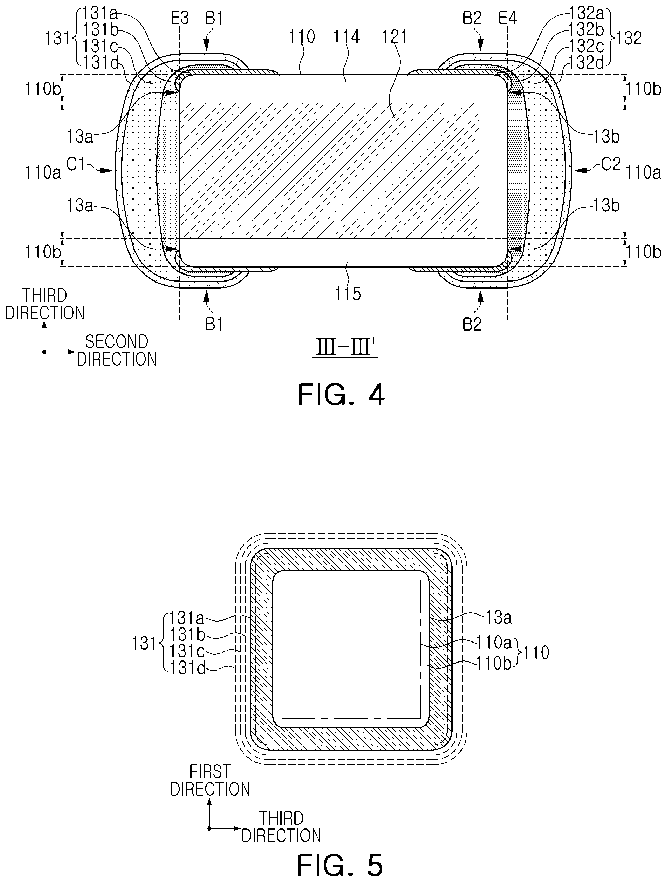

FIG. 4 is a cross-sectional view schematically illustrating a cross section taken along line III-III' of FIG. 2.

FIG. 5 is a side view of a multilayer electronic component viewed from a third surface of FIG. 1.

Hereinafter, a multilayer electronic component 100 according to an embodiment will be described in detail with reference to FIGS. 1 to 5. In addition, a multilayer ceramic capacitor is described as an example of a multilayer electronic component, but the present disclosure is not limited thereto and may be applied to various multilayer electronic components, such as inductors, piezoelectric elements, varistors, or thermistors.

The size of the multilayer electronic component 100 according to an embodiment is not particularly limited. The dimension of the multilayer electronic component 100 in the first direction may be, for example, 0.25 mm to 4.0 mm, the dimension of the multilayer electronic component 100 in the second direction may be, for example, 0.5 mm to 5.5 mm, and the dimension of the multilayer electronic component 100 in the third direction may be, for example, 0.25 mm to 4.0 mm.

The multilayer electronic component 100 may include a body 110 including a dielectric layer 111 and internal electrodes 121 and 122, and external electrodes 131 and 132. There is no particular limitation on the detailed shape of the body 110, but as illustrated, the body 110 may have a hexahedral shape or a similar shape. Due to shrinkage of the ceramic powder particle contained in the body 110 during the sintering process or polishing of the corners, the body 110 may not have a hexahedral shape with completely straight lines, but may have a substantially hexahedral shape.

The body 110 may have first and second surfaces 1 and 2 opposing each other in a first direction, third and fourth surfaces 3 and 4 connected to the first and second surfaces 1 and 2 and opposing each other in the second direction, and fifth and sixth surfaces 5 and 6 connected to the first to fourth surfaces 1, 2, 3 and 4 and opposing each other in the third direction.

The body 110 may include a central portion 110a including a dielectric layer 111 and internal electrodes 121 and 122 alternately disposed with the dielectric layer 111 in the first direction, and an outer portion 110b covering both sides of the central portion 110a in the first direction and both sides the central portion 110a in the third direction. The plurality of dielectric layers 111 forming the central portion 110a are in a sintered state, and the boundaries between adjacent dielectric layers 111 may be integrated to the extent that it is difficult to confirm without using a scanning electron microscope (SEM).

The dielectric layer 111 may include, for example, a perovskite-type compound represented by ABO₃ as a main component. The perovskite compound represented by ABO₃ may be, for example, BaTiO₃, (Ba₁₋ₓCaₓ) TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) in which Ca (calcium), Zr (zirconium) or the like is partially solubilized in BaTiO₃, or the like.

The average thickness td of the dielectric layer 111 is not particularly limited. The average thickness td of the dielectric layer 111 may be, for example, 0.1 um to 55 um, 0.1 um to 20 um, 0.1 um to 10 um, 0.1 um to 5 um, 0.1 um to 2 um, or 0.1 um to 0.4 µm.

The internal electrodes 121 and 122 may include, for example, a first internal electrode 121 and a second internal electrode 122, alternately disposed in a first direction with a dielectric layer 111 therebetween. For example, the first internal electrode 121 and the second internal electrode 122, which are a pair of electrodes having different polarities, may be disposed to face each other with the dielectric layer 111 therebetween. The first internal electrode 121 and the second internal electrode 122 may be electrically separated from each other by the dielectric layer 111 disposed therebetween.

The first internal electrode 121 may be spaced apart from the fourth surface 4 and connected to the first external electrode 131 on the third surface 3. The second internal electrode 122 may be spaced apart from the third surface 3 and connected to the second external electrode 132 on the fourth surface 4.

The conductive metal included in the internal electrodes 121 and 122 may be at least one of Ni, Cu, Pd, Ag, Au, Pt, Sn, W, Ti, and alloys thereof, and in more detail, may include Ni, but the present disclosure is not limited thereto.

The average thickness te of the internal electrodes 121 and 122 is not particularly limited. The average thickness te of the internal electrodes 121 and 122 may be, for example, 0.1 µm to 4.0 µm, 0.1 um to 3.0 µm, 0.1 µm to 1.0 um, or 0.1 µm to 0.4 µm.

The average thickness td of the dielectric layer 111 and the average thickness te of the internal electrodes 121 and 122 refer to the dimensions of the dielectric layer 111 and the internal electrodes 121 and 122 in the first direction, respectively. The average thickness td of the dielectric layer 111 and the average thickness te of the internal electrodes 121 and 122 may be measured by scanning the first direction and second direction cross-sections of the body 110 with a scanning electron microscope (SEM) at 10,000 times magnification. In more detail, the average thickness td of the dielectric layer 111 may be measured by measuring the thickness of one dielectric layer 111 at multiple points, for example, 30 points spaced equally in the second direction, and then taking the average value. In addition, the average thickness te of the internal electrodes 121 and 122 may be measured by measuring the thickness of one internal electrode 121 or 122 at multiple points, for example, 30 points spaced equally in the second direction, and then taking the average value. The 30 points spaced equally may be designated at the central portion 110a. On the other hand, if these average value measurements are performed for each of 10 dielectric layers 111 and 10 internal electrodes 121 and 122 and then the average values are measured, the average thickness td of the dielectric layer 111 and the average thickness te of the internal electrodes 121 and 122 may be further generalized.

The outer portion 110b may continuously cover both sides of the central portion 110a in the first direction and both sides of the central portion 110a in the third direction. The outer portion 110b may basically play a role in preventing damage to the internal electrode due to physical or chemical stress. The outer portion 110b may have a composition similar to the dielectric layer and may include a perovskite type compound represented by ABO₃ as a main component.

The outer portion 110b may include a first cover portion 112 and a second cover portion 113 respectively disposed on both sides of the central portion 110a in the first direction, and may include a first margin portion 114 and a second margin portion 115 respectively disposed on both sides of the central portion 110a in the third direction. The boundary between the central portion 110a and the first cover portion 112 may correspond to the upper surface of an uppermost internal electrode in the first direction, the boundary between the central portion 110a and the second cover portion 113 may correspond to the lower surface of a lowermost internal electrode in the first direction, and the boundary between the central portion 110a and the margin portions 114 and 115 may correspond to both ends of the internal electrode in the third direction.

The average thickness of the cover portions 112 and 113 is not particularly limited. The average thickness of the cover portions 112 and 113 may be, for example, 400 um or less, 150 um or less, 100 um or less, 30 um or less, or 20 µm or less. The average thickness of the cover portions 112 and 113 may be, for example, 10 um or more. In this case, the average thickness of the cover portions 112 and 113 refers to the average thickness of each of the first cover portion 112 and the second cover portion 113. The average thickness of the cover portions 112 and 113 may refer to the average dimension of the cover portions 112 and 113 in the first direction, and may be an average value of the dimensions in the first direction measured at five points at equal intervals in the second direction in a first-second directional cross section of the body 110 cut from a center of the body 110 in the third direction.

The average thickness of the margin portions 114 and 115 is not particularly limited. The average thickness of the margin portions 114 and 115 may be, for example, 150 um or less, 100 um or less, 20 um or less, or 15 um or less. The average thickness of the margin portions 114 and 115 may be, for example, 5 um or more. In this case, the average thickness of the margin portions 114 and 115 refers to the average thickness of each of the first margin portion 114 and the second margin portion 115. The average thickness of the margin portions 114 and 115 may refer to the average dimension of the margin portions 114 and 115 in the third direction, and may be the average value of the dimensions in the third direction, measured at five equally spaced points in the first direction in a first-third directional cross section of the body 110 cut from a center of the body 110 in the second direction.

Hereinafter, an example of a method of forming a body 110 will be described. First, a ceramic powder particle for forming a dielectric layer 111 is prepared. The ceramic powder particle may be, for example, BaTiO₃, or (Ba₁₋ₓCaₓ)TiO₃ (0<x<1), Ba(Ti_{1-y}Ca_{y})O₃ (0<y<1), (Ba₁₋ₓCaₓ)(Ti_{1-y}Zr_{y})O₃ (0<x<1, 0<y<1) or Ba(Ti_{1-y}Zr_{y})O₃ (0<y<1) in which Ca (calcium), Zr (zirconium) or the like is partially solubilized in BaTiO₃. The BaTiO₃ powder may be synthesized by reacting a titanium raw material such as titanium dioxide with a barium raw material such as barium carbonate. Examples of methods for synthesizing the ceramic powder particle include a solid-phase method, a sol-gel method, a hydrothermal synthesis method, and the like, but the present disclosure is not limited thereto. Next, after drying and pulverizing the prepared ceramic powder particle, an organic solvent such as ethanol and a binder such as polyvinyl butyral are mixed to prepare a ceramic slurry, and the ceramic slurry is applied and dried on a carrier film to prepare a ceramic green sheet.

Next, an internal electrode conductive paste containing a metal powder, a binder, an organic solvent, or the like is printed on the ceramic green sheet to a predetermined thickness using a screen printing method or a gravure printing method, thereby forming an internal electrode pattern.

Then, the ceramic green sheet on which the internal electrode pattern is printed is peeled off from the carrier film, and the ceramic green sheets on which the internal electrode pattern is printed are laminated and pressed in a predetermined number of layers to form a ceramic laminate. To form the cover portions 112 and 113 after sintering, a predetermined number of ceramic green sheets on which the internal electrode pattern is not formed may be laminated on the upper and lower portions of the ceramic laminate. Afterwards, the ceramic laminate is cut to have a predetermined chip size, and the cut chip is sintered at a temperature of, for example, 1000°C or more and 1400°C or less to form a body 110.

On the other hand, the margin portions 114 and 115 may be formed by applying and sintering a conductive paste for an internal electrode, except for the area where the margin portion is to be formed on the ceramic green sheet. Alternatively, to suppress the step by the internal electrodes 121 and 122, the ceramic laminate may be cut so that the internal electrode pattern is exposed on both sides of the third direction of the cut chip, and then the margin portion forming sheet may be attached on both sides of the cut chip in the third direction and then sintered to form the margin portions 114 and 115.

The external electrodes 131 and 132 may include connection portions C1 and C2 disposed on the third surface 3 or the fourth surface 4, and band portions B1 and B2 extending from the connection portions C1 and C2 to portions of the first surface 1 and the second surface 2. The first external electrode 131 may include a first connection portion C1 disposed on the third surface 3 and a first band portion B1 extending from the first connection portion C1 to portions of the first surface 1 and the second surface 2, and the second external electrode 132 may include a second connection portion C2 disposed on the fourth surface 4 and a second band portion B2 extending from the second connection portion C2 to portions of the first surface 1 and the second surface 2. The band portions B1 and B2 may extend from the connection portions C1 and C2 to portions of the fifth and sixth surfaces 5 and 6.

The first connection portion C1 may refer to an area of the first external electrode 131 positioned outside a virtual plane E3 parallel to the third surface, and the first band portion B1 may refer to an area of the first external electrode 131 positioned inwardly of the virtual plane E3 parallel to the third surface. For example, the boundary between the first connection portion C1 and the first band portion B1 may be located on the virtual plane E3 parallel to the third surface.

The second connection portion C2 may refer to an area of the second external electrode 132 positioned outside the virtual plane E4 parallel to the fourth surface, and the second band portion B2 may refer to an area of the second external electrode 132 positioned inwardly of the virtual plane E4 parallel to the fourth surface. For example, the boundary between the second connection portion C2 and the second band portion B2 may be located on the virtual plane E4 parallel to the fourth surface.

The external electrodes 131 and 132 may include glass layers 131a and 132a disposed in the band portions B1 and B2, base electrode layers 131b and 132b disposed in the connection portions C1 and C2 and in contact with the internal electrodes 121 and 122, and conductive resin layers 131c and 132c disposed on the base electrode layers 131b and 132b.

The first external electrode 131 may include a first glass layer 131a disposed in the first band portion B1, a first base electrode layer 131b disposed in the first connection portion C1 and in contact with the first internal electrode 121, a first conductive resin layer 131c disposed on the first base electrode layer 131b, and a first plating layer 131d disposed on the first conductive resin layer 131c.

The second external electrode 132 may include a second glass layer 132a disposed in the second band portion B2, a second base electrode layer 132b disposed in the second connection portion C2 and in contact with the second internal electrode 122, a second conductive resin layer 132c disposed on the second base electrode layer 132b, and a second plating layer 132d disposed on the second conductive resin layer 132c.

The glass layers 131a and 132a are basically disposed in the band portions B1 and B2 to improve the bending strength of the multilayer electronic component 100, and in addition, may play a role in improving the bonding strength between the body 110 and the external electrodes 131 and 132. In detail, since the bonding strength between the body 110 and the glass is stronger than the bonding strength between the body 110 and the resin, the glass layers 131a and 132a effectively prevent external moisture or plating solution from penetrating into the interior of the body 110 through the ends of the band portions B1 and B2, thereby improving the reliability of the multilayer electronic component 100. In addition, since glass has superior heat resistance and pressure resistance than resin, the stability of the multilayer electronic component 100 in a high temperature and high pressure environment may be improved by including the glass layers 131a and 132a in the external electrodes 131 and 132.

According to an embodiment of the present disclosure, portions of the glass layers 131a and 132a are disposed in the connection portions C1 and C2, and ends 13a and 13b of the glass layers disposed in the connection portions C1 and C2 may be disposed on the outer portion 110b. For example, a portion of the first glass layer 131a may be disposed in the first connection portion C1, and an end 13a of the first glass layer disposed in the first connection portion C1 may be disposed on the outer portion 110b. In addition, a portion of the second glass layer 132a may be disposed in the second connection portion C2, and an end 13b of the second glass layer disposed in the second connection portion C2 may be disposed on the outer portion 110b. For example, the first glass layer 131a may be disposed on the first, second, fifth, and sixth surfaces 1, 2, 5 and 6 and extend over a portion of the third surface 3, but may not be in contact with the first internal electrode 121. In addition, the second glass layer 132a may be disposed on the first, second, fifth, and sixth surfaces 1, 2, 5 and 6 and extend over a portion of the fourth surface 4, but may not be in contact with the second internal electrode 122. For example, the first glass layer 131a may be disposed in the first connection portion C1 and the first band portion B1, but may be disposed outside the central portion 110a based on the first direction and the third direction, and the second glass layer 132a may be disposed in the second connection portion C2 and the second band portion B2, but may be disposed outside the central portion 110a based on the first direction and the third direction. The first and second glass layers 131a and 132a may be disposed spaced apart from each other.

By arranging portions of the glass layers 131a and 132a in the connection portions C1 and C2, the corner portion of the body 110 that is vulnerable to external moisture or plating solution penetration may be effectively sealed, thereby effectively improving the reliability of the multilayer electronic component 100. However, if the glass layers 131a and 132a are in direct contact with the internal electrodes 121 and 122, the connectivity between the internal electrodes 121 and 122 and the external electrodes 131 and 132 may deteriorate, thereby reducing the capacitance of the multilayer electronic component 100. Therefore, it may be preferable that the ends 13a and 13b of the glass layers disposed in the connection portions C1 and C2 be disposed on the outer portion 110b. In an embodiment, the glass layers 131a and 132a may be in contact with at least portions of the first surface 1 and the second surface 2 to improve the bonding strength and reliability between the body 110 and the external electrodes 131 and 132. In more detail, the glass layers 131a and 132a may be in contact with at least portions of the first surface, the second surface, the fifth surface, and the sixth surface 1, 2, 5 and 6. The glass layers 131a and 132a may be in contact with a portion of the third surface 3 or the fourth surface 4. The first glass layer 131a may be in contact with a portion of the third surface 3, and the second glass layer 132a may be in contact with a portion of the fourth surface 4.

In an embodiment, the ends of the glass layers 131a and 132a disposed in the band portions B1 and B2 may be exposed from the conductive resin layers 131c and 132c. For example, the end of the first glass layer 131a disposed in the first band portion B1 may be exposed from the first conductive resin layer 131c, and the end of the second glass layer 132a disposed in the second band portion B2 may be exposed from the second conductive resin layer 132c. As a result, the effect of preventing external moisture and plating solution penetration according to some embodiments of the present disclosure may be more prominent. In addition, by increasing the length of the band portions B1 and B2, the bending strength of the multilayer electronic component 100 may be improved, while the insulation between the first external electrode 131 and the second external electrode 132 may be maintained to prevent arc discharge.

The glass layers 131a and 132a may include the first glass. The glass layers 131a and 132a may include at least one of Ba, Ca, Zn, Al, B, Si, and Fe. In an embodiment, the glass layers 131a and 132a may include Fe. Since the Fe component has excellent corrosion resistance and acid resistance, when the glass layers 131a and 132a include Fe, the effect of preventing external moisture and plating solution penetration according to some embodiments of the present disclosure may be more significant.

The thickness of the glass layers 131a and 132a need not be particularly limited. However, the thickness of the glass layers 131a and 132a measured in the band portions B1 and B2 may be 0.2 um or more and 4 um or less. The thickness of the glass layers 131a and 132a may be measured from an image of the first-second directional cross section of the multilayer electronic component 100 cut from the center of the body 110 in the third direction, scanned by a scanning electron microscope (SEM).

There is no need to specifically limit a method of forming the glass layers 131a and 132a. For example, the glass layers 131a and 132a may be formed by dipping the body 110 in a glass paste including glass frit, a binder and the like, and then removing the glass paste applied on a portion of the outer portion 110b and the central portion 110a and then performing a heat treatment. Alternatively, the glass layers 131a and 132a may be formed through a sputtering method, or the like.

The base electrode layers 131b and 132b may basically perform the role of electrically connecting the internal electrodes 121 and 122 and the external electrodes 131 and 132 by directly contacting the internal electrodes 121 and 122. The base electrode layers 131b and 132b are disposed in the connection portions C1 and C2 and may be sufficient to contact the internal electrodes 121 and 122, but portions of the base electrode layers 131b and 132b may disposed in the band portions B1 and B2, and the base electrode layers 131b and 132b may be disposed between the glass layers 131a and 132a and the conductive resin layers 131c and 132c in the band portions B1 and B2. For example, in the first band portion B1, the first base electrode layer 131b may be disposed between the first glass layer 131a and the first conductive resin layer 131c, and in the second band portion B2, the second base electrode layer 132b may be disposed between the second glass layer 132a and the second conductive resin layer 132c.

The base electrode layers 131b and 132b may include a metal and a second glass. In an embodiment, the first glass included in the glass layers 131a and 132a may have a different composition from the second glass. For example, the first glass may include Fe, and the second glass may not include Fe. Although Fe has excellent corrosion resistance and acid resistance, if it reacts with Ni of the internal electrodes 121 and 122 to form a Ni-Fe compound, the connectivity between the internal electrodes 121 and 122 and the external electrodes 131 and 132 may be reduced, which may result in reduction of the capacitance of the multilayer electronic component 100. Therefore, it may be preferable that the second glass that may be in direct contact with the internal electrodes 121 and 122 not include Fe. Alternatively, in an embodiment, the first and second glasses each include Fe, but the content (at%) of Fe among the total content of elements constituting the first glass may be greater than the content (at%) of Fe among the total content of elements constituting the second glass. The components of the first and second glasses may be calculated from images scanned using SEM-EDS. In detail, after polishing the multilayer electronic component to the position of the center in the third direction to expose the cross sections in the first direction and the second direction, the content (at%) of Fe among the total content of elements constituting the first and second glasses may be measured using SEM-EDS.

The metal included in the base electrode layers 131b and 132b may include Cu, Ni, Pd, Pt, Au, Ag, Pb and/or alloys thereof, but the present disclosure is not limited thereto.

The thickness of the base electrode layers 131b and 132b does not need to be particularly limited. However, a maximum thickness of the base electrode layers 131b and 132b measured at the center of the connection portions C1 and C2 may be 10 um or more and 100 um or less. The maximum thickness of the base electrode layers 131b and 132b may be measured from the image of the first-second directional cross section of the multilayer electronic component cut from the center of the body 110 in the third direction, scanned by a scanning electron microscope (SEM).

The base electrode layers 131b and 132b may be formed, for example, by dipping the body 110 on which the glass layers 131a and 132a are formed into a conductive paste including metal powder, glass frit, a binder, an organic solvent, and the like, and then sintering the same. The sintering to form the base electrode layers 131b and 132b may be performed at a temperature of 500°C or more and 900°C or less, but the present disclosure is not limited thereto.

The conductive resin layers 131c and 132c may be disposed in the connection portions C1 and C2 and the band portions B1 and B2. The conductive resin layers 131c and 132c may include a metal and a resin. The conductive resin layers 131c and 132c may basically play a role in improving the bending strength of the multilayer electronic component 100.

The metal included in the conductive resin layers 131c and 132c may include at least one of spherical particles and flake-shaped particles. In this case, the spherical particles may also include a shape other than a perfect spherical shape, and for example, may include a shape having a length ratio of the major axis to the minor axis (major axis/minor axis) of 1.45 or less. The flake-shaped particles refer to powder having a flat and elongated shape, and are not particularly limited, but for example, the ratio of the length of the major axis to the minor axis (major axis/minor axis) may be 1.95 or more.

The metal included in the conductive resin layers 131c and 132c may include, for example, Cu, Ni, Pd, Pt, Au, Ag, Pb, Sn, and/or alloys thereof. The resin included in the conductive resin layers 131c and 132c may include, for example, at least one of an epoxy resin, an acrylic resin, and ethyl cellulose. In an embodiment, the conductive resin layers 131c and 132c may further include an intermetallic compound including at least one of Ag₃Sn, Ni₃Sn₄, Cu₆Sn₅ and Cu₃Sn.

The thickness of the conductive resin layers 131c and 132c need not be particularly limited. However, a maximum thickness of the conductive resin layers 131c and 132c measured at the center of the connection portions C1 and C2 may be 10 um or more and 100 um or less. The maximum thickness of the conductive resin layers 131c and 132c may be measured from an image of the first-second directional cross section of the multilayer electronic component cut from the center of the body 110 in the third direction, scanned by a scanning electron microscope (SEM).

The conductive resin layers 131c and 132c may be formed, for example, by dipping the body 110 on which the base electrode layers 131b and 132b are formed into a conductive resin composition including a metal powder, a resin, a binder, an organic solvent, and the like, and then performing a curing heat treatment at a temperature of 200°C to 300°C.

The plating layers 131d and 132d may improve the mounting characteristics. The type of the plating layers 131d and 132d is not particularly limited, and may be a plating layer including Ni, Sn, Pd, and/or alloys thereof, and may be formed of a plurality of layers. The plating layers 131d and 132d may be, for example, a Ni plating layer or a Sn plating layer, and may be in a form in which a Ni plating layer and a Sn plating layer are formed sequentially. In addition, the plating layers 131d and 132d may include a plurality of Ni plating layers and/or a plurality of Sn plating layers. The plating layers 131d and 132d may be formed using an electrolytic plating method and/or an electroless plating method.

The drawing describes a structure in which a multilayer electronic component 100 has two external electrodes 131 and 132, but is not limited thereto, and the number or shape of the external electrodes 131 and 132 may be changed depending on the shape of the internal electrodes 121 and 122 or other uses.

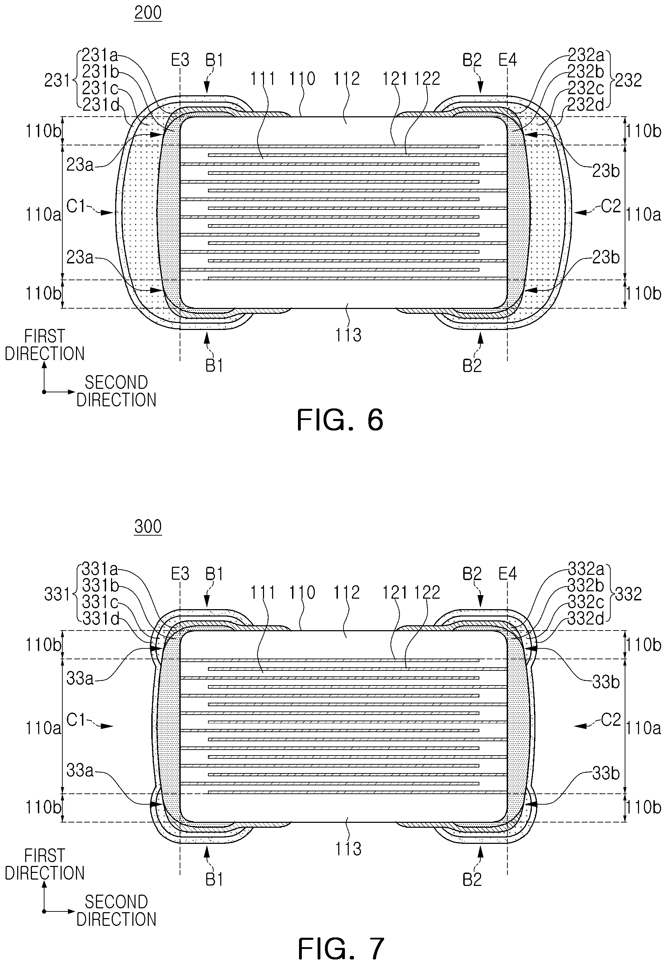

FIGS. 6 to 8 are cross-sectional views schematically illustrating a multilayer electronic component according to another embodiment, and are drawings corresponding to FIG. 2. Hereinafter, a multilayer electronic component 200 according to another embodiment will be described with reference to FIGS. 6 to 8. The same/similar reference numerals are used for the configurations identical/similar to those of the multilayer electronic component 100 described in FIGS. 6 to 8, and duplicate descriptions are omitted.

Referring to FIG. 6, the multilayer electronic component 200 according to an embodiment may include a first external electrode 231 that includes a first glass layer 231a disposed in the first band portion B1, a first base electrode layer 231b disposed in the first connection portion C1 and in contact with the first internal electrode 121, a first conductive resin layer 231c disposed on the first base electrode layer 231b, and a first plating layer 231d disposed on the first conductive resin layer 231c, and a second external electrode 232 that includes a second glass layer 232a disposed in the second band portion B2, a second base electrode layer 232b disposed in a second connection portion C2 and contacting the second internal electrode 122, a second conductive resin layer 232c disposed on the second base electrode layer 232b, and a second plating layer 232d disposed on the second conductive resin layer 232c.

According to an embodiment, the glass layers 231a and 232a may be disposed between the base electrode layers 231b and 232b and the conductive resin layers 231c and 232c in the connection portions C1 and C2. For example, the first glass layer 231a may be disposed between the first base electrode layer 231b and the first conductive resin layer 231c in the first connection portion C1, the second glass layer 232a may be disposed between the second base electrode layer 232b and the second conductive resin layer 232c in the second connection portion C2.

Portions of the base electrode layers 231b and 232b may be disposed in the band portions B1 and B2, the base electrode layers 231b and 232b may be disposed between the body 110 and the glass layers 231a and 232a in the band portions B1 and B2. For example, a portion of the first base electrode layer 231b is disposed in the first band portion B1, and the first base electrode layer 231b may be disposed between the body 110 and the first glass layer 231a in the first band portion B1. A portion of the second base electrode layer 232b is disposed in the second band portion B2, and the second base electrode layer 232b may be disposed between the body 110 and the second glass layer 232a in the second band portion B2.

In an embodiment, since portions of the glass layers 231a and 232a are disposed in the connection portions C1 and C2, the corner portion of the body 110 that is vulnerable to external moisture or plating solution penetration may be effectively sealed, and thus the reliability of the multilayer electronic component 200 may be effectively improved. In addition, the ends 23a and 23b of the glass layers disposed in the connection portions C1 and C2 are disposed on the outer portion 110b, thereby securing a bonding area between the base electrode layers 231b and 232b and the conductive resin layers 231c and 232c to a certain level or higher and thus preventing the capacitance of the multilayer electronic component 200 from decreasing.

The shape of the conductive resin layers 231c and 232c does not need to be particularly limited, but the conductive resin layers 231c and 232c may cover the base electrode layers 231b and 232b in the connection portions C1 and C2.

The base electrode layers 231b and 232b may be formed by dipping the body 110 in a conductive paste and then sintering the same. The glass layers 231a and 232a may be formed by dipping the body 110 on which the base electrode layers 231b and 232b are formed into glass paste, removing the glass paste applied on the central portion 110a and a portion of the outer portion 110b, and then performing a heat treatment, or formed by using a sputtering method.

Referring to FIG. 7, a multilayer electronic component 300 according to an embodiment may include a first external electrode 331 including a first glass layer 331a disposed in a first band portion B1, a first base electrode layer 331b disposed in a first connection portion C1 and in contact with a first internal electrode 121, and a first conductive resin layer 331c disposed on the first base electrode layer 331b, and a second external electrode 332 including a second glass layer 332a disposed in a second band portion B2, a second base electrode layer 332b disposed in a second connection portion C2 and in contact with a second internal electrode 122, and a second conductive resin layer 332c disposed on the second base electrode layer 332b.

The glass layers 331a and 332a may be disposed between the base electrode layers 331b and 332b and the conductive resin layers 331c and 332c in the connection portions C1 and C2. In addition, portions of the base electrode layers 331b and 332b may be disposed in the band portions B1 and B2, and the base electrode layers 331b and 332b may be disposed between the body 110 and the glass layers 331a and 332a in the band portions B1 and B2.

The base electrode layers 331b and 332b may have portions that are not covered by the conductive resin layers 331c and 332c in the connection portions C1 and C2. For example, the first base electrode layer 331b may have an area not covered by the first conductive resin layer 331c in the first connection portion C1, and the second base electrode layer 332b may have an area not covered by the second conductive resin layer 332c in the second connection portion C2. The ends of the conductive resin layers 331c and 332c disposed in the connection portions C1 and C2 may be disposed on the central portion 110a or may be disposed on the outer portion 110b.

The external electrodes 331 and 332 may include plating layers 331d and 332d disposed on the base electrode layers 331b and 332b in the connection portions C1 and C2 and on the conductive resin layers 331c and 332c in the band portions B1 and B2. For example, the first external electrode 331 may include a first plating layer 331d disposed on the first base electrode layer 331b in the first connection portion C1 and disposed on the first conductive resin layer 331c in the first band portion B1, and the second external electrode 332 may include a second plating layer 332d disposed on the second base electrode layer 332b in the second connection portion C2 and disposed on the second conductive resin layer 332c in the second band portion B2.

In an embodiment, since portions of the glass layers 331a and 332a are disposed in the connection portions C1 and C2, the corner portion of the body 110 that is vulnerable to external moisture or plating solution penetration may be effectively sealed, thereby effectively improving the reliability of the multilayer electronic component 300. In addition, the ends 33a and 33b of the glass layers disposed in the connection portions C1 and C2 are disposed on the outer portion 110b, thereby securing a bonding area between the base electrode layers 331b and 332b and the plating layers 331d and 332d to a certain level or higher and thus improving the capacitance and ESR characteristics of the multilayer electronic component 200.

The conductive resin layers 331c and 332c may be formed by dipping the body 110 on which the base electrode layers 331b and 332b are formed into a conductive resin composition, then removing a portion of the conductive resin composition applied to central regions of the connection portions C1 and C2, and then performing a curing heat treatment.

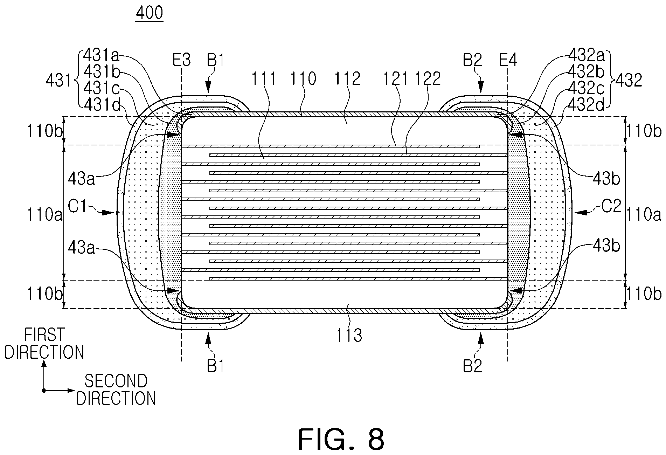

Referring to FIG. 8, a multilayer electronic component 400 according to an embodiment may include a first external electrode 431 including a first glass layer 431a disposed in a first band portion B1, a first base electrode layer 431b disposed in a first connection portion C1 and in contact with a first internal electrode 121, a first conductive resin layer 431c disposed on the first base electrode layer 431b, and a first plating layer 431d disposed on the first conductive resin layer 431c, and a second external electrode 432 including a second glass layer 432a disposed in a second band portion B2, a second base electrode layer 432b disposed in a second connection portion C2 and in contact with a second internal electrode 122, a second conductive resin layer 432c disposed on the second base electrode layer 432b, and a second plating layer 432d disposed on the second conductive resin layer 432c.

The first and second glass layers 431a and 432a may be connected to each other on the first surface and the second surface to cover the first surface and the second surface. Since the first and second glass layers 431a and 432a completely cover the first surface and the second surface, the moisture-resistant reliability improvement effect in the present disclosure may be more significant. Optionally, the first and second glass layers 431a and 432a may also be connected to each other on the fifth surface and the sixth surface to cover the fifth surface and the sixth surface. Since the first and second glass layers 431a and 432a completely cover the first, second, fifth, and sixth surfaces, the moisture-resistant reliability effect in the present disclosure may be further improved.

In an embodiment, since portions of the glass layers 431a and 432a are disposed in the connection portions C1 and C2, the corner portion of the body 110 that is vulnerable to external moisture or plating solution penetration may be effectively sealed, thereby effectively improving the reliability of the multilayer electronic component 400. However, if the glass layers 431a and 432a are in direct contact with the internal electrodes 121 and 122, the connection between the internal electrodes 121 and 122 and the external electrodes 431and 432 may deteriorate, thereby reducing the capacitance of the multilayer electronic component 400. Therefore, it may be preferable that the ends 43a and 43b of the glass layers disposed in the connection portions C1 and C2 be disposed on the outer portion 110b.

The glass layers 431a and 432a may be formed by applying glass paste on the first and second surfaces of the body 110 and then performing heat treatment, or by using a sputtering method. The base electrode layers 431b and 432b may be formed by dipping the body 110 on which the glass layers 431a and 432a are formed into a conductive paste and then sintering the same.

As set forth above, according to an embodiment, the reliability of multilayer electronic components may be improved.

The bending strength of multilayer electronic components may be improved.

The present disclosure is not limited by the above-described embodiments and accompanying drawings, but is intended to be limited by the appended claims. Therefore, various forms of substitution, modification and change will be possible by those skilled in the art within the scope of the technical spirit of the present disclosure described in the claims, and this will also be said to fall within the scope of the present disclosure.

In addition, the expression 'an embodiment' does not indicate the same embodiment, and is provided to emphasize and describe different unique characteristics. However, the embodiments presented above are not excluded from being implemented in combination with features of another embodiment. For example, even if a matter described in one specific embodiment is not described in another embodiment, it may be understood as a description related to another embodiment, unless there is a description to the contrary or contradicting the matter in another embodiment.

In addition, expressions such as first and second are used to distinguish one component from another, and do not limit the order and/or importance of the components. In some cases, without departing from the scope of rights, a first element may be named a second element, and similarly, a second element may be named a first element.

While embodiments have been illustrated and described above, it will be apparent to those skilled in the art that modifications and variations could be made without departing from the scope of the present disclosure as defined by the appended claims.

## Claims

1. A multilayer electronic component comprising:
a body including a first surface and a second surface opposing each other in a first direction, a third surface and a fourth surface connected to the first surface and the second surface and opposing each other in a second direction, and a fifth surface and a sixth surface connected to the first surface to the fourth surface and opposing each other in a third direction, the body including a central portion including a dielectric layer and internal electrodes alternately disposed with the dielectric layer in the first direction, and an outer portion covering both sides of the central portion in the first direction and both sides of the central portion in the third direction; and
an external electrode including a connection portion disposed on the third surface or the fourth surface and a band portion extending from the connection portion to portions of the first surface and the second surface,
wherein the external electrode includes a glass layer disposed in the band portion, a base electrode layer disposed in the connection portion and in contact with one or more of the internal electrodes, and a conductive resin layer disposed on the base electrode layer, and
a portion of the glass layer is disposed in the connection portion, and an end of the glass layer disposed in the connection portion is disposed on the outer portion.

2. The multilayer electronic component of claim 1, wherein the glass layer is in contact with at least portions of the first surface and the second surface.

3. The multilayer electronic component of claim 1, wherein an end of the glass layer disposed in the band portion is exposed from the conductive resin layer.

4. The multilayer electronic component of claim 1, wherein the glass layer is in contact with a portion of the third surface or the fourth surface, and
a portion of the base electrode layer is disposed in the band portion, and the base electrode layer is disposed between the glass layer and the conductive resin layer in the band portion.

5. The multilayer electronic component of claim 1, wherein the glass layer is disposed between the base electrode layer and the conductive resin layer in the connection portion, and
a portion of the base electrode layer is disposed in the band portion, and the base electrode layer is disposed between the body and the glass layer in the band portion.

6. The multilayer electronic component of claim 5, wherein the conductive resin layer covers the base electrode layer in the connection portion.

7. The multilayer electronic component of claim 5, wherein the base electrode layer has a region not covered by the conductive resin layer in the connection portion.

8. The multilayer electronic component of claim 7, wherein the external electrode further includes a plating layer disposed on the base electrode layer in the connection portion and disposed on the conductive resin layer in the band portion.

9. The multilayer electronic component of claim 1, wherein the external electrode includes a first external electrode including a first connection portion disposed on the third surface and a first band portion extending from the first connection portion to portions of the first surface and the second surface, and a second external electrode including a second connection portion disposed on the fourth surface and a second band portion extending from the second connection portion to portions of the first surface and the second surface,
the first external electrode includes a first glass layer disposed in the first band portion, a first base electrode layer disposed in the first connection portion, and a first conductive resin layer disposed on the first base electrode layer,
the second external electrode includes a second glass layer disposed in the second band portion, a second base electrode layer disposed in the second connection portion, and a second conductive resin layer disposed on the second base electrode layer, and
the first and second glass layers are disposed spaced apart from each other.

10. The multilayer electronic component of claim 1, wherein the external electrode includes a first external electrode including a first connection portion disposed on the third surface and a first band portion extending from the first connection portion to portions of the first surface and the second surface, and a second external electrode including a second connection portion disposed on the fourth surface and a second band portion extending from the second connection portion to portions of the first surface and the second surface,
the first external electrode includes a first glass layer disposed in the first band portion, a first base electrode layer disposed in the first connection portion, and a first conductive resin layer disposed on the first base electrode layer,
the second external electrode includes a second glass layer disposed in the second band portion, a second base electrode layer disposed in the second connection portion, and a second conductive resin layer disposed on the second base electrode layer, and
the first and second glass layers are connected to each other on the first surface and the second surface and cover the first surface and the second surface.

11. The multilayer electronic component of claim 1, wherein the glass layer includes a first glass, and
the base electrode layer includes a metal and a second glass,
wherein the first glass has a composition different from a composition of the second glass.

12. The multilayer electronic component of claim 11, wherein the first glass includes Fe, and
the second glass does not include Fe.

13. The multilayer electronic component of claim 11, wherein the first and second glasses each contain Fe, and
a content (at%) of Fe among a total content of elements constituting the first glass is greater than a content (at%) of Fe among a total content of elements constituting the second glass.

14. The multilayer electronic component of claim 1, wherein the glass layer includes at least one of Ba, Ca, Zn, Al, B, Si, and Fe.

15. The multilayer electronic component of claim 1, wherein the glass layer includes Fe.
